# NEW EUROPEAN PATENT SPECIFICATION

(11) **EP 3 013 163 B2**
(45) Date of publication and mention of the opposition decision: **09.03.2022**
(45) Mention of the grant of the patent: 13.02.2019
(21) Application number: 14739252.6
(22) Date of filing: 24.06.2014
(51) Int. Cl.: A24F 23/02, B29C 65/08, B29C 65/78, B29L 31/00, B29L 5/00, B29C 65/00

(54) **DEVICE FOR WELDING A ZIP SEAL IN A TOBACCO POUCH**
VORRICHTUNG ZUM VERSCHWEISSEN EINER REISSVERSCHLUSSDICHTUNG AN EINEM TABAKBEUTEL
DISPOSITIF DESTINÉ À SOUDER UNE FERMETURE À GLISSIÈRE DANS UNE BLAGUE À TABAC

(30) Priority: 24.06.2013 NL 2011032
(43) Date of publication of application: 04.05.2016
(73) Proprietor: Sluis Cigar Machinery B.V., 8263 BC Kampen (NL)
(72) Inventor: DEKKER, Roelof Jan, 8263 BC Kampen (NL)
(74) Representative: EP&C
(86) International application number: PCT/NL2014/050415
(87) International publication number: WO 2014/209114

(56) References cited:
- EP-A1- 0 661 208
- EP-A1- 2 489 284
- EP-A1- 2 522 491
- EP-A1- 2 567 907
- EP-A2- 2 216 167
- WO-A1-2010/092404
- WO-A1-2013/002148
- DE-A1- 19 906 873
- DE-A1-102007 030 382
- DE-A1-102009 008 129
- DE-A1-102009 040 096
- DE-T2- 69 025 093
- FR-A1- 2 619 339
- JP-A- H11 245 305
- JP-A- 2003 276 099
- US-A- 3 853 671
- US-A- 4 709 533
- US-A- 4 812 074
- US-A- 5 335 997
- US-A1- 2002 062 925
- US-A1- 2003 093 971
- US-A1- 2003 168 149
- US-A1- 2007 199 183
- US-B1- 6 477 820
- US-B2- 6 941 726

## Description

The invention relates to a device for welding a zip seal in a tobacco pouch. In the known devices the zip seal, which comprises a first zip strip and a mating second zip strip, is welded to at least one pliable sheet forming a first wall and an opposite second wall of the tobacco pouch. The at least one pliable sheet and zip seal is conveyed through the device and a welding unit moves intermittently synchronous with the first and second wall and the zip seal to perform the welding operation. After the welding operation is performed, the welding unit is placed at a distance from the first and second wall and moved upstream to a starting position where the welding unit is placed again in contact with the first and second wall and moved synchronous with the first and second wall to perform another welding operation.

This requires a complex construction and controlling device to ensure that the welding unit is moved in the right manner. Besides the fact that this is an expensive construction, it also has several moving parts which are prone to wear. In several cases, the movement of the welding unit limits the production capacity of the device.

US6477820 discloses a method and apparatus for providing a slider-equipped zipper on a pouch in a form/fill/seal operation. In the preferred embodiment of the invention, a foldable slider is employed, and is shifted from an open configuration to a closed configuration for installation on zipper strips on the pouch. Stops are preferably provided at the ends of the zipper strips by application of heat and pressure to form a boss on one side and a corresponding recess on the other, without requiring additional material. A hermetic peelable seal preferably is provided beneath the zipper strips. The slider preferably is applied to the zipper strips immediately before or immediately after filling, or immediately after formation of the peelable seal. Means may be provided to shift the position of the slider to close the zipper. The slider may include means to secure it in place by a mechanical locking mechanism such as a snap fit engagement, or the slider may be welded in closed position by application of heat, or by ultrasonic welding. A vacuum engagement mechanism may be employed to separate the walls of the pouch to a predetermined position relative to one another while positioning and closing the slider.

EP2489284 discloses that after engagement of a male belt-like member and a female belt-like member are disengaged, a void portion is formed by punching the female belt-like member with a die. The female belt-like member having the void portion and the male belt-like member are re-engaged with each other and fed between a folded base material film that is continuously fed. A male belt-like base and a female belt-like base are heat-sealed. A seal bar heat-seals the base material film to form a bottom seal portion. A side seal bar heat-seals the base material film to form side seal portions. The cutter cuts the base material film in the middle of the side seal portions to produce the packaging bag in which three sides of the bottom seal portion and the side seal portions are heat-sealed.

US4812074 discloses an apparatus for making bag material having a bag wall sheet or film folded to provide a closed folded top for each bag, a zipper strip having a web being nested within the bag top fold and having the margins of the web carrying recloseable zipper profiles, and at least one of the margins remaining unattached relative to the bag wall.

WO2010/092404 discloses a slider which is shaped to have an internal cavity above its profile-separating plough. The cavity receives a portion of an end stomp of the zipper so that, when the slider is at the limit of its zipper- closing movement, no gap is left between the slider and the end stomp. To achieve this, the end surface of the end stomp is formed obliquely to the length of the zipper and provides a triangular portion of the stomp which is received in the cavity (80). Also disclosed are methods of forming the end stomp, apparatus therefor and various different shapes of end stomp achieving the same objective. It is an object to provide an improved, or at least alternative, device for welding a zip seal in a tobacco pouch.

In the invention, a device is provided according to claim 1.

Since the welding unit is not moved, it does not need a complex construction and controlling device required to move the welding unit. Further, the production capacity of the device is not limited by the movement of the welding unit.

In an embodiment of the device according to the invention, the anvil is located in a fixed position.

In an embodiment of the device according to the invention, the first wall comprises a first inside surface and a first outside surface, the second wall comprises a second inside surface and a second outside surface, and in the welding position;
- the first zip strip is positioned on the first inside surface,
- the first welding head vibrates against the first outside surface,
- the second zip strip is positioned on the second inside surface, and
- the second welding head vibrates against the second outside surface.

In an embodiment of the device according to the invention, the first welding head vibrates against the first wall in the same area where the first zip strip is located, and the second welding head vibrates against the second wall in the same area where the second zip strip is located.

In an embodiment of the device according to the invention, the first welding head and second welding head vibrate with a frequency of between 20 and 50 kHz, preferably between 30 and 40 kHz.

In an embodiment of the device according to the invention, the first welding head and second welding head vibrate with the same frequency.

In an embodiment of the device according to the invention, the first welding head and second welding head vibrate with a frequency of 35 kHz.

In an embodiment of the device according to the invention, the conveyer moves the at least one sheet and zip seal with a speed of between 5 and 60 meter/minute, preferably between 10 and 40 meter/minute.

In an embodiment of the device according to the invention, the conveyer moves the at least one sheet and zip seal with the same speed.

In an embodiment of the device according to the invention, the conveyer moves the at least one sheet and zip seal with a speed of 10 meter/minute through the welding unit.

In an embodiment of the device according to the invention, the first welding head has a first contact surface which is in contact with the first wall during vibration, the second welding head has a second contact surface which is in contact with the second wall during vibration, and the first contact surface and the second contact surface each have a length of between 30 and 70 mm, preferably between 40 and 60 mm, in the conveying direction.

In an embodiment of the device according to the invention, the first contact surface and the second contact surface have the same length.

In an embodiment of the device according to the invention, the first welding head has a first contact surface which is in contact with the first wall during vibration, the second welding head has a second contact surface which is in contact with the second wall during vibration, and the first contact surface and the second contact surface each have a length of 50 mm in the conveying direction.

In an embodiment of the device according to the invention, the first contact surface and the second contact surface each have a width of between 5 and 20 mm in a direction perpendicular to the conveying direction.

In an embodiment of the device according to the invention, the first contact surface and the second contact surface have the same width.

In an embodiment of the device according to the invention, the first contact surface and the second contact surface each have a width of 15 mm in a direction perpendicular to the conveying direction.

In an embodiment of the device according to the invention, the first contact surface and the second contact surface each have a width of 10 mm in a direction perpendicular to the conveying direction.

In an embodiment of the device according to the invention, the first welding head and the second welding head each vibrate in a direction perpendicular to the conveying direction over a distance of between 40 and 80 µm, preferably between 50 and 70 µm.

In an embodiment of the device according to the invention, the first welding head and the second welding head vibrate over the same distance.

In an embodiment of the device according to the invention, the first welding head and the second welding head each vibrate in a direction perpendicular to the conveying direction over a distance of 60 µm.

In the invention, the first welding head and the second welding head are pressed on the first wall and second wall, respectively, with a static pressure of between 0,5 and 6 bar, preferably between 1 and 3 bar.

In an embodiment of the device according to the invention, thefirstwelding head and the second welding head are pressed on the first wall and second wall, respectively, with the same static pressure.

In an embodiment of the device according to the invention, thefirstwelding head and the second welding head are pressed on the first wall and second wall, respectively, with a static pressure of 1,6 bar.

In an embodiment of the device according to the invention, the at least one sheet is made from PE.

In an embodiment of the device according to the invention, the zip seal is made from PE.

The invention further relates to a method according to claim 10.

In an embodiment of the method according to the invention, the anvil is located in a fixed position.

In an embodiment of the method according to the invention, in the welding position;
- the first zip strip is positioned on a first inside surface of the first wall,
- the first welding head vibrates against a first outside surface of the first wall,
- the second zip strip is positioned on a second inside surface of the second wall, and
- the second welding head vibrates against a second outside surface of the second wall.

In an embodiment of the method according to the invention, the first welding head vibrates against the first wall in the same area where the first zip strip is located, and the second welding head vibrates against the second wall in the same area where the second zip strip is located.

In an embodiment of the method according to the invention, the first welding head and second welding head vibrate with a frequency of between 20 and 50 kHz, preferably between 30 and 40 kHz.

In an embodiment of the method according to the invention, the first welding head and second welding head vibrate with the same frequency.

In an embodiment of the method according to the invention, the first welding head and second welding head vibrate with a frequency of 35 kHz.

In an embodiment of the method according to the invention, the conveyer moves the at least one sheet and zip seal with a speed of between 5 and 60 meter/minute, preferably between 10 and 40 meter/minute.

In an embodiment of the method according to the invention, the conveyer moves the at least one sheet and zip seal with the same speed.

In an embodiment of the method according to the invention, the conveyer moves the at least one sheet and zip seal with a speed of 10 meter/minute through the welding unit.

In an embodiment of the method according to the invention, the first welding head has a first contact surface which is in contact with the first wall during vibration, the second welding head has a second contact surface which is in contact with the second wall during vibration, and the first contact surface and the second contact surface each have a length of between 30 and 70 mm, preferably between 40 and 60 mm, in the conveying direction.

In an embodiment of the method according to the invention, the first contact surface and the second contact surface have the same length.

In an embodiment of the method according to the invention, the first welding head has a first contact surface which is in contact with the first wall during vibration, the second welding head has a second contact surface which is in contact with the second wall during vibration, and the first contact surface and the second contact surface each have a length of 50 mm in the conveying direction.

In an embodiment of the method according to the invention, the first contact surface and the second contact surface each have a width of between 5 and 20 mm in a direction perpendicular to the conveying direction.

In an embodiment of the method according to the invention, the first contact surface and the second contact surface have the same width.

In an embodiment of the method according to the invention, the first contact surface and the second contact surface each have a width of 15 mm in a direction perpendicular to the conveying direction.

In an embodiment of the method according to the invention, the first contact surface and the second contact surface each have a width of 10 mm in a direction perpendicular to the conveying direction.

In an embodiment of the method according to the invention, the first welding head and the second welding head each vibrate in a direction perpendicular to the conveying direction over a distance of between 40 and 80 µm, preferably between 50 and 70 µm.

In an embodiment of the method according to the invention, the first welding head and the second welding head vibrate over the same distance.

In an embodiment of the method according to the invention, the first welding head and the second welding head each vibrate in a direction perpendicular to the conveying direction over a distance of 60 µm.

In the method according to the invention, the first welding head and the second welding head are pressed on the first wall and second wall, respectively, with a static pressure of 0,5 and 6 bar, preferably between 1 and 3 bar.

In an embodiment of the method according to the invention, the first welding head and the second welding head are pressed on the first wall and second wall, respectively, with the same static pressure.

In an embodiment of the method according to the invention, the first welding head and the second welding head are pressed on the first wall and second wall, respectively, with a static pressure of 1.6 bar.

In an embodiment of the method according to the invention, the at least one sheet is made from PE.

In an embodiment of the method according to the invention, the zip seal is made from PE.

Embodiments of the device and method according to the invention will be described by way of example only, with reference to the accompanying schematic drawings in which corresponding reference symbols indicate corresponding parts, and in which:
figure 1 schematically show a view in perspective of a first embodiment of the device according to the invention,
figure 2 schematically shows a view in perspective of the welding unit of the device of fig. 1,
figure 3 schematically shows a view in perspective and in cross section of the device of fig. 1,
figure 4 schematically show a side view of the welding unit of fig. 2 ,
figure 5 schematically shows a top view of the welding device of fig. 2 , and
figure 6 schematically shows a top view of an alternative embodiment, not according to the invention, of the welding device of fig. 2 .

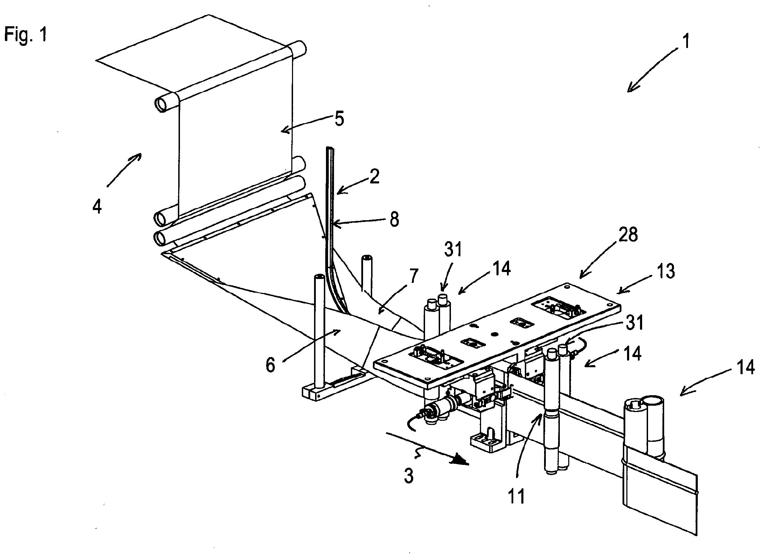

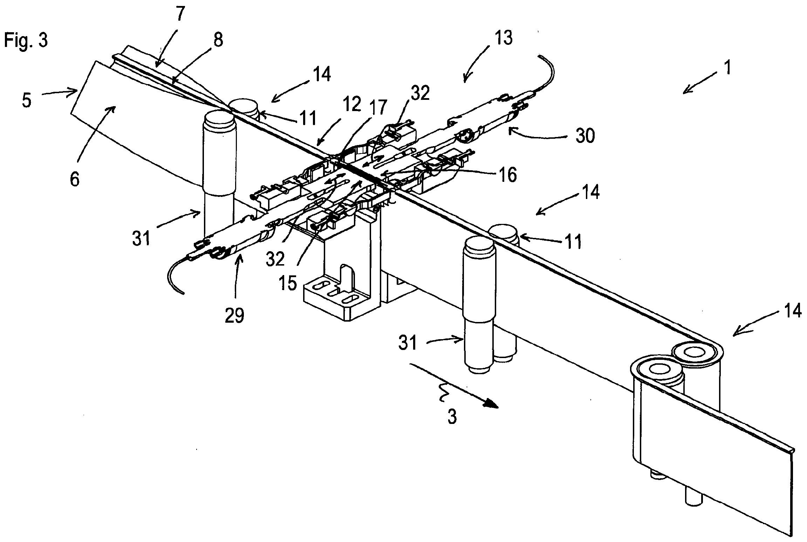

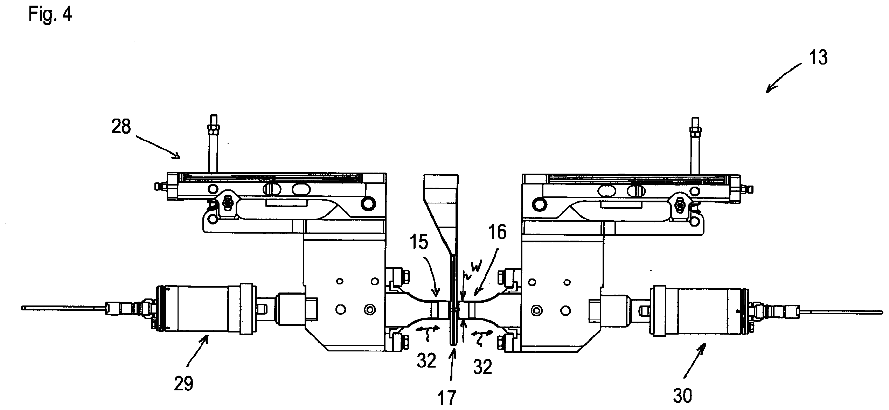

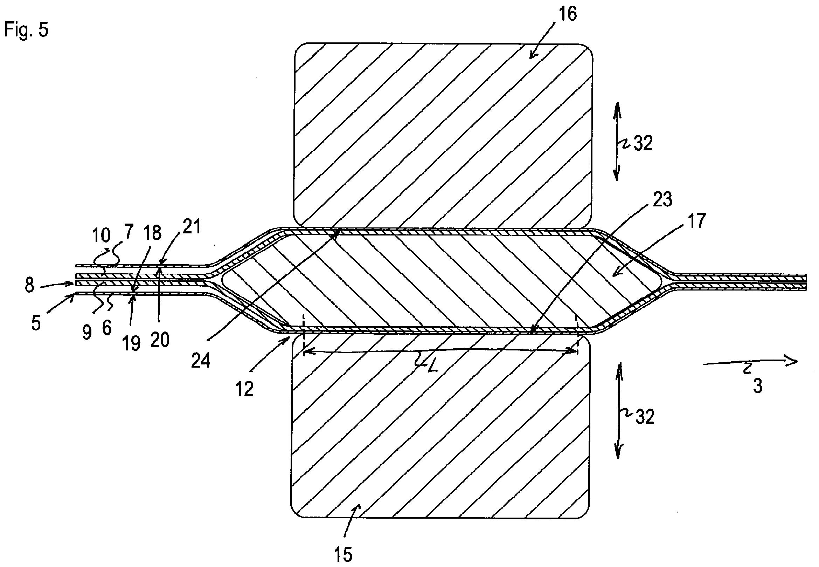

The figures 1-4 show views of an embodiment of the device 1 according to the invention. The device 1 comprises a sheet supply 4 to provide a pliable sheet 5 forming a first wall 6 and an opposite second wall 7 of the tobacco pouch, and a zip seal supply 2 to provide a zip seal 8 comprising a first zip strip 9 and a mating second zip strip 10. It is also possible that the sheet supply 4 provides multiple pliable sheets 5, such as two sheets, forming the first wall 6 and second wall 7 of the tobacco pouch. The zip seal 8 is shown in further detail in fig. 5.

A guide 11 is provided to position the zip seal 8 in a welding position 12 between the first wall 6 and the second wall 7. A welding unit 13 is provided to weld the first zip strip 9 to the first wall 6 and the second zip strip 10 to the second wall 7, while the zip seal 8 is located in the welding position 12. A conveyer 14 conveys the at least one sheet 5 and the zip seal 8 in a conveying direction 3 through the guide 11 and the welding unit 13. The conveyer 14 comprises rotatable rollers 31 which displace the at least one sheet 5 and the zip seal 8 and move them in the conveying direction 3. The guide 11 is formed by recesses in the rollers 31.

The welding unit 1 is an ultrasonic welding unit comprising a first welding head 15 configured to vibrate against the first wall 6 to weld the first zip strip 9 on the first wall 6 and a second welding head 16 configured to vibrate against the second wall 7 to weld the second zip strip 10 on the second wall 7. This is amongst other shown in detail in fig. 5. The first welding head 15 is driven by a first welding driver 29 and the second welding head 16 is driven by a second welding driver 30.

The conveyer 14 is configured to continuously convey the at least one sheet 5 and the zip seal 8 through the welding unit 13. The first welding head 15 and the second welding head 16 are located in a fixed position when seen in the conveying direction 3. The welding unit 13 is connected to the outside world in a fixed position via a connector 28.

Since the welding unit 13 is not moved, it does not need a complex construction and controlling device required to move the welding unit 13. Further, the production capacity of the device 1 is not limited by the movement of the welding unit 13.

The conveyer 14 is configured to continuously move the at least one sheet 5 and the zip seal 8 relative to the first welding head 15 and the second welding head 16, while the first welding head 15 and the second welding head 16 vibrate against the first wall 6 and second wall 7, respectively.

The welding unit 13 comprises an anvil 17 located between the first welding head 15 and the second welding head 16. In the welding position 12, the first wall 6 and the first zip strip 9 are located between the first welding head 15 and the anvil 17 and the first zip strip 9 is pressed against the anvil 17 by the vibrating first welding head 15. Furthermore, the second wall 7 and the second zip strip 10 are located between the second welding head 16 and the anvil 17, and the second zip strip 10 is pressed against the anvil 17 by the vibrating second welding head 16. The anvil 17 is located in a fixed position.

The first wall 6 comprises a first inside surface 18 and a first outside surface 19, the second wall 7 comprises a second inside surface 20 and a second outside surface 21. In the welding position 12; the first zip strip 9 is positioned on the first inside surface 18, the first welding head 15 vibrates against the first outside surface 19, the second zip strip 10 is positioned on the second inside surface 20, and the second welding head 16 vibrates against the second outside surface 21.

The welding unit 13 is configured to vibrate the first welding head 15 against the first wall 6 in the same area where the first zip strip 9 is located, and the second welding head 16 against the second wall 7 in the same area where the second zip strip 10 is located.

The welding unit 13 is configured to vibrate the first welding head 15 and second welding head 16 with a frequency of between 20 and 50 kHz. The welding unit 13 is configured to vibrate the first welding head 15 and second welding head 16 with the same frequency.

The conveyer 14 is configured to move the at least one sheet 5 and zip seal 8 with a speed of between 5 and 60 meter/minute. The conveyer 14 is configured to move the at least one sheet 5 and zip seal 8 with the same speed.

The first welding head 15 has a first contact surface 23 which is in contact with the first wall 6 during vibration. The second welding head 16 has a second contact surface 24 which is in contact with the second wall 7 during vibration. The first contact surface 23 and the second contact surface 24 each have a length L of between 30 and 70 mm in the conveying direction 3. The first contact surface 23 and the second contact surface 24 have the same length L.

In a direction perpendicular to the conveying direction 3, the first contact surface 23 and the second contact surface 24 each have a width W of between 5 and 20 mm. The first contact surface 23 and the second contact surface 24 have the same width W.

The welding unit 13 is configured to vibrate each of the first welding head 15 and the second welding head 16 in a vibration direction 32 perpendicular to the conveying direction 3 over a distance of between 40 and 80 µm. The welding unit 13 is configured to vibrate the first welding head 15 and the second welding head 16 over the same distance.

The welding unit 13 is configured to press each of the first welding head 15 and the second welding head 16 on the first wall 6 and second wall 7, respectively, with a static pressure of between 0,5 and 6 bar. The welding unit 13 is configured to press the first welding head 15 and the second welding head 16 on the first wall 6 and second wall 7 with the same pressure.

The at least one sheet 5 and the zip seal 8 are made from PE.

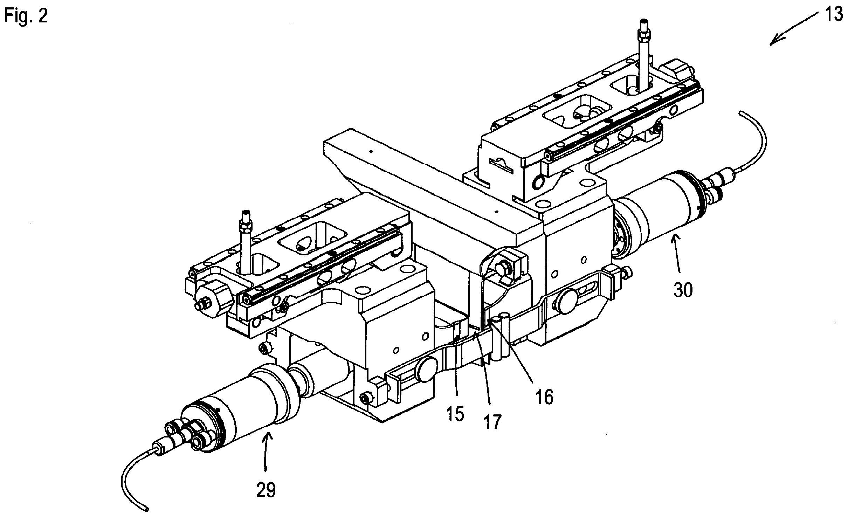

Figure 5 shows a schematic representation of the welding device 1 of fig. 2 in a top view. The at least one sheet 5 forming the first wall 6 and the second wall 7 and the zip seal 8 comprising the first zip strip 9 and the second zip strip 10 are moved in the conveying direction 3. The first welding head 15 and the second welding head 16 are located in a fixed position when seen in the conveying direction 3.

The conveyer 14 continuously moves the at least one sheet 5 and the zip seal 8 relative to the first welding head 15 and the second welding head 16, while the first welding head 15 and the second welding head 16 vibrate against the first wall 6 and second wall 7, respectively.

The anvil 17 located between the first welding head 15 and the second welding head 16 guides the first wall 6 and the first zip strip 9 between the first welding head 15 and the anvil 17 and guides the second wall 7 and the second zip strip 10 between the second welding head 16 and the anvil 17. The anvil 17 is located in a fixed position.

The first welding head 15 vibrates against the first wall 6 to weld the first zip strip 9 on the first wall 6 and the second welding head 16 vibrates against the second wall 7 to weld the second zip strip 10 on the second wall 7. The first welding head 15 and second welding head 16 vibrate in a vibration direction 32 perpendicular to the conveying direction 3.

Two walls 6, 7 formed from at least one pliable sheet 5 can be welded together when the two walls 6, 7 are conveyed between the first welding head 15 and the anvil 17, while the first welding head 15 vibrates against one of the walls 6 and the other wall 7 is pressed against the anvil 17.

In an embodiment of the method, the further welding head vibrates in the same direction and over the same distance as the welding head.

In an embodiment of the method, the further welding head is pressed with the same static pressure on the second wall as the welding head is pressed on the first wall.

In an embodiment of the method, the at least one sheet is made from PE.

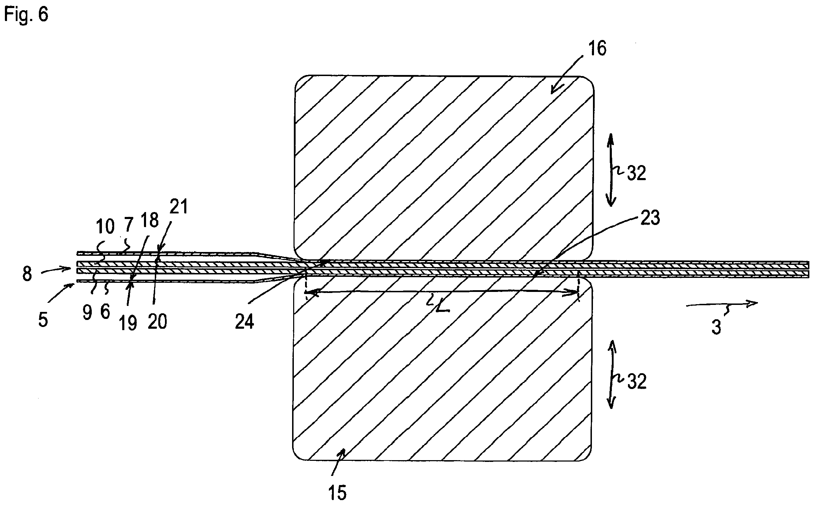

Figure 6 shows a schematic representation of an alternative embodiment of the welding device of fig. 2, not being part of the invention, in a top view. The welding unit differs from the one shown in fig. 2, in that the welding unit 13 does not comprise an anvil 17 located between the first welding head 15 and the second welding head 16.

Two walls 6, 7 formed from at least one pliable sheet 5 can be welded together when the two walls 6, 7 are conveyed between the first welding head 15 and the second welding head 16, while the first welding head 15 vibrates against one of the walls 6 and the second welding head 16 vibrates against the other of the walls 7.

## Claims

1. Device (1) for welding a zip seal (8) in a tobacco pouch, said device comprising;
- a sheet supply (4) to provide at least one pliable sheet (5) forming a first wall (6) and an opposite second wall (7) of the tobacco pouch,
- a zip seal supply (2) to provide a zip seal (8) comprising a first zip strip (9) and a mating second zip strip (10),
- a guide (11) to position the zip seal (8) in a welding position (12) between the first wall (6) and the second wall (7),
- a welding unit (13) to weld the first zip strip (9) to the first wall (6) and the second zip strip (10) to the second wall (7), while the zip seal (8) is located in the welding position (12),
- a conveyer (14) to convey the at least one sheet (5) and the zip seal (8) in a conveying direction (3) through the guide (11) and the welding unit (13), wherein
-- the welding unit (13) is an ultrasonic welding unit comprising a first welding head (15) which vibrates against the first wall (6) to weld the first zip strip (9) on the first wall (6) and a second welding head (16) which vibrates against the second wall (7) to weld the second zip strip (10) on the second wall (7),
-- the conveyer (14) continuously conveys the at least one sheet (5) and the zip seal (8) through the welding unit (13),
-- the first welding head (15) and the second welding head (16) are located in a fixed position when seen in the conveying direction (3), and **characterised in that**;
-- the conveyer (14) continuously moves the at least one sheet (5) and the zip seal (8) relative to the first welding head (15) and the second welding head (16), while the first welding head (15) and the second welding head (16) vibrate against the first wall (6) and second wall (7), respectively,
-- the welding unit (13) comprises an anvil (17) located between the first welding head (15) and the second welding head (16),
-- in the welding position (12), the first wall (6) and the first zip strip (9) are located between the first welding head (15) and the anvil (17), and the first zip strip (9) is pressed against the anvil (17) by the vibrating first welding head (15), and
-- in the welding position, the second wall (7) and the second zip strip (10) are located between the second welding head (16) and the anvil (17), and the second zip strip (10) is pressed against the anvil (17) by the vibrating second welding head (16),
wherein the first welding head (15) and the second welding head (16) are pressed on the first wall (6) and second wall (7), respectively, with a static pressure of between 0,5 and 6 bar, preferable between 1 and 3 bar.

2. Device according to claim 1, wherein the anvil (17) is located in a fixed position.

3. Device according to any of the preceding claims, wherein the first wall (6) comprises a first inside surface (18) and a first outside surface (19), the second wall (7) comprises a second inside surface (20) and a second outside surface (21), and in the welding position (12);
- the first zip strip (9) is positioned on the first inside surface (18),
- the first welding head (15) vibrates against the first outside surface (19),
- the second zip strip (10) is positioned on the second inside surface (20), and
- the second welding head (16) vibrates against the second outside surface (21).

4. Device according to any of the preceding claims, wherein the first welding head (15) vibrates against the first wall (6) in the same area where the first zip strip (9) is located, and the second welding head (16) vibrates against the second wall (7) in the same area where the second zip strip (10) is located.

5. Device according to any of the preceding claims, wherein the first welding head (15) and second welding head (16) vibrate with a frequency of between 20 and 50 kHz, preferably between 30 and 40 kHz.

6. Device according to any of the preceding claims, wherein the conveyer (14) moves the at least one sheet (5) and zip seal (8) with a speed of between 5 and 60 meter/minute, preferably between 10 and 40 meter/minute.

7. Device according to any of the preceding claims, wherein the first welding head (15) has a first contact surface (23) which is in contact with the first wall (6) during vibration, the second welding head (16) has a second contact surface (24) which is in contact with the second wall (7) during vibration, and the first contact surface (23) and the second contact surface (24) each have a length of between 30 and 70 mm, preferably between 40 and 60 mm, in the conveying direction (3).

8. Device according to any of the preceding claims, wherein the first welding head (15) and the second welding head (16) each vibrate in a vibration direction (32) perpendicular to the conveying direction (3) over a distance of between 40 and 80 µm, preferably between 50 and 70 µm.

9. Device according to any of the preceding claims, wherein the at least one sheet (5) is made from PE, and the zip seal is made from PE.

10. Method of welding a zip seal (8) in a tobacco pouch, wherein said method comprises;
- providing at least one pliable sheet (5) forming a first wall (6) and an opposite second wall (7) of the tobacco pouch,
- providing a zip seal (8) comprising a first zip strip (9) and a mating second zip strip (10),
- guiding the zip seal (8) with a guide (11) in a welding position (12) between the first wall (6) and the second wall (7),
- conveying the at least one sheet (5) and the zip seal (8) with a conveyer (14) in a conveying direction (3) through the guide (11) and the welding unit (13),
- using the welding unit (13) to weld the first zip strip (9) to the first wall (6) and the second zip strip (10) to the second wall (7), while the zip seal (8) is located in the welding position (12), wherein
-- the welding unit (13) is an ultrasonic welding unit comprising a first welding head (15) and a second welding head (16),
-- the conveyer (14) continuously conveys the at least one sheet (5) and the zip seal (8) through the welding unit (13),
-- the first welding head (15) vibrates against the first wall (6) to weld the first zip strip (9) on the first wall (6) and the second welding head (16) vibrates against the second wall (7) to weld the second zip strip (10) on the second wall (7), while the first welding head (15) and second welding head (16) are located in a fixed position when seen in the conveying direction (3), and **characterised in that**;
-- the at least one sheet (5) and the zip seal (8) are continuously moved relative to the first welding head (15) and the second welding head (16), while the first welding head (15) and the second welding head (16) vibrate against the first wall (6) and second wall (7), respectively,
-- the welding unit (13) comprises an anvil (17) located between the first welding head (15) and the second welding head (16),
-- in the welding position (12), the first wall (6) and the first zip strip (9) are located between the first welding head (15) and the anvil (17), and the first zip strip (9) is pressed against the anvil (17) by the vibrating first welding head (15), and
-- in the welding position (12), the second wall (7) and the second zip strip (10) are located between the second welding head (16) and the anvil (17), and the second zip strip (10) is pressed against the anvil (17) by the vibrating second welding head (16), wherein the first welding head (15) and the second welding head (16) are pressed on the first wall (6) and second wall (7), respectively, with a static pressure of between 0,5 and 6 bar, preferable between 1 and 3 bar.

11. Method according to claim 10, wherein the anvil (17) is located in a fixed position.

12. Method according to claim 10 or 11, wherein in the welding position;
- the first zip strip (9) is positioned on a first inside surface (18) of the first wall (6),
- the first welding head (15) vibrates against a first outside surface (19) of the first wall (6),
- the second zip strip (10) is positioned on a second inside surface (20) of the second wall (7), and
- the second welding head (16) vibrates against a second outside surface (21) of the second wall (7).

13. Method according to any of the claims 10-12, wherein the first welding head (15) vibrates against the first wall (6) in the same area where the first zip strip (9) is located, and the second welding head (16) vibrates against the second wall (7) in the same area where the second zip strip (10) is located.

14. Method according to any of the claims 10-13, wherein the first welding head (15) and second welding head (16) vibrate with a frequency of between 20 and 50 kHz, preferably between 30 and 40 kHz.

## Patentansprüche

1. Vorrichtung (1) zum Schweißen eines Reißverschlusses (8) in einen Tabakbeutel, wobei die Vorrichtung Folgendes umfasst:
- eine Bogenzufuhr (4), um mindestens einen biegsamen Bogen (5) bereitzustellen, der eine erste Wand (6) und eine gegenüberliegende zweite Wand (7) des Tabakbeutels bildet,
- eine Reißverschlusszufuhr (2), um einen Reißverschluss (8) bereitzustellen, der einen ersten Reißstreifen (9) und einen dazu passenden zweiten Reißstreifen (10) umfasst,
- eine Führung (11), um den Reißverschluss (8) in einer Schweißposition (12) zwischen der ersten Wand (6) und der zweiten Wand (7) zu positionieren,
- eine Schweißeinheit (13), um den ersten Reißstreifen (9) an die erste Wand (6) und den zweiten Reißstreifen (10) an die zweite Wand (7) zu schweißen, während der Reißverschluss (8) in der Schweißposition (12) angeordnet ist,
- ein Fördermittel (14), um den mindestens einen Bogen (5) und den Reißverschluss (8) in einer Förderrichtung (3) durch die Führung (11) und die Schweißeinheit (13) zu befördern, wobei
- die Schweißeinheit (13) eine Ultraschallschweißeinheit ist, die einen ersten Schweißkopf (15), der gegen die erste Wand (6) vibriert, um den ersten Reißstreifen (9) an die erste Wand (6) zu schweißen, und einen zweiten Schweißkopf (16), der gegen die zweite Wand (7) vibriert, um den zweiten Reißstreifen (10) an die zweite Wand (7) zu schweißen, umfasst,
- das Fördermittel (14) kontinuierlich den mindestens einen Bogen (5) und den Reißverschluss (8) durch die Schweißeinheit (13) bewegt,
- der erste Schweißkopf (15) und der zweite Schweißkopf (16), wenn in die Förderrichtung (3) geblickt wird, in einer festen Position angeordnet sind, und **dadurch gekennzeichnet, dass**:
- das Fördermittel (14) kontinuierlich den mindestens einen Bogen (5) und den Reißverschluss (8) relativ zu dem ersten Schweißkopf (15) und dem zweiten Schweißkopf (16) bewegt, während der erste Schweißkopf (15) und der zweite Schweißkopf (16) gegen die erste Wand (6) beziehungsweise die zweite Wand (7) vibrieren,
- die Schweißeinheit (13) einen Gegenhalter (17) umfasst, der zwischen dem ersten Schweißkopf (15) und dem zweiten Schweißkopf (16) angeordnet ist,
- in der Schweißposition (12) die erste Wand (6) und der erste Reißstreifen (9) zwischen dem ersten Schweißkopf (15) und dem Gegenhalter (17) angeordnet sind und der erste Reißstreifen (9) durch den vibrierenden ersten Schweißkopf (15) gegen den Gegenhalter (17) gedrückt wird, und
- in der Schweißposition die zweite Wand (7) und der zweite Reißstreifen (10) zwischen dem zweiten Schweißkopf (16) und dem Gegenhalter (17) angeordnet sind und der zweite Reißstreifen (10) durch den vibrierenden zweiten Schweißkopf (16) gegen den Gegenhalter (17) gedrückt wird, wobei der erste Schweißkopf (15) und der zweite Schweißkopf (16) auf die erste Wand (6) beziehungsweise die zweite Wand (7) mit einem statischen Druck von zwischen 0,5 und 6 bar, vorzugsweise von zwischen 1 und 3 bar, gepresst werden.

2. Vorrichtung nach Anspruch 1, wobei der Gegenhalter (17) in einer festen Position angeordnet ist.

3. Vorrichtung nach einem der vorhergehenden Ansprüche, wobei die erste Wand (6) eine erste innere Oberfläche (18) und eine erste äußere Oberfläche (19) umfasst, wobei die zweite Wand (7) eine zweite innere Oberfläche (20) und eine zweite äußere Oberfläche (21) umfasst, und wobei in der Schweißposition (12);
- der erste Reißstreifen (9) an der ersten inneren Oberfläche (18) positioniert ist,
- der erste Schweißkopf (15) gegen die erste äußere Oberfläche (19) vibriert,
- der zweite Reißstreifen (10) an der zweiten inneren Oberfläche (20) positioniert ist, und
- der zweite Schweißkopf (16) gegen die zweite äußere Oberfläche (21) vibriert.

4. Vorrichtung nach einem der vorhergehenden Ansprüche, wobei der erste Schweißkopf (15) in demselben Bereich gegen die erste Wand (6) vibriert, in dem der erste Reißstreifen (9) angeordnet ist, und wobei der zweite Schweißkopf (16) in demselben Bereich gegen die zweite Wand (7) vibriert, in dem der zweite Reißstreifen (10) angeordnet ist.

5. Vorrichtung nach einem der vorhergehenden Ansprüche, wobei der erste Schweißkopf (15) und der zweite Schweißkopf (16) mit einer Frequenz zwischen 20 und 50 kHz, vorzugsweise zwischen 30 und 40 kHz, vibrieren.

6. Vorrichtung nach einem der vorhergehenden Ansprüche, wobei das Fördermittel (14) den mindestens einen Bogen (5) und den Reißverschluss (8) mit einer Geschwindigkeit zwischen 5 und 60 Metern/Minute, vorzugsweise zwischen 10 und 40 Metern/Minute, bewegt.

7. Vorrichtung nach einem der vorhergehenden Ansprüche, wobei der erste Schweißkopf (15) eine erste Kontaktoberfläche (23) aufweist, die während der Vibration mit der ersten Wand (6) in Kontakt steht, der zweite Schweißkopf (16) eine zweite Kontaktoberfläche (24) aufweist, die während der Vibration mit der zweiten Wand (7) in Kontakt steht, und die erste Kontaktoberfläche (23) und die zweite Kontaktoberfläche (24) jeweils eine Länge von zwischen 30 und 70 mm, vorzugsweise von zwischen 40 und 60 mm, in der Förderrichtung (3) aufweisen.

8. Vorrichtung nach einem der vorhergehenden Ansprüche, wobei der erste Schweißkopf (15) und der zweite Schweißkopf (16) jeweils in einer Vibrationsrichtung (32), rechtwinklig zu der Förderrichtung (3), über einen Abstand von zwischen 40 und 80 µm, vorzugsweise von zwischen 50 und 70 µm, vibrieren.

9. Vorrichtung nach einem der vorhergehenden Ansprüche, wobei der mindestens eine Bogen (5) aus PE und der Reißverschluss aus PE hergestellt ist.

10. Verfahren zum Schweißen von einem Reißverschluss (8) in einen Tabakbeutel, wobei das Verfahren Folgendes umfasst:
- Bereitstellen von mindestens einem biegsamen Bogen (5), der eine erste Wand (6) und eine gegenüberliegende zweite Wand (7) von dem Tabakbeutel bildet,
- Bereitstellen von einem Reißverschluss (8), der einen ersten Reißstreifen (9) und einen dazu passenden zweiten Reißstreifen (10) umfasst,
- Führen von dem Reißverschluss (8) mit einer Führung (11) in eine Schweißposition (12) zwischen der ersten Wand (6) und der zweiten Wand (7),
- Fördern von dem mindestens einen Bogen (5) und dem Reißverschluss (8) mit einem Fördermittel (14) in einer Förderrichtung (3) durch die Führung (11) und die Schweißeinheit (13),
- Verwenden von der Schweißeinheit (13), um den ersten Reißstreifen (9) an die erste Wand (6) und den zweiten Reißstreifen (10) an die zweite Wand (7) zu schweißen, während der Reißverschluss (8) in der Schweißposition (12) angeordnet ist, wobei
- die Schweißeinheit (13) eine Ultraschallschweißeinheit ist, die einen ersten Schweißkopf (15) und einen zweiten Schweißkopf (16) umfasst,
- das Fördermittel (14) kontinuierlich den mindestens einen Bogen (5) und den Reißverschluss (8) durch die Schweißeinheit (13) bewegt,
- der erste Schweißkopf (15) gegen die erste Wand (6) vibriert, um den ersten Reißstreifen (9) an die erste Wand (6) zu schweißen, und der zweite Schweißkopf (16) gegen die zweite Wand (7) vibriert, um den zweiten Reißstreifen (10) an die zweite Wand (7) zu schweißen, während der erste Schweißkopf (15) und der zweite Schweißkopf (16), wenn in die Förderrichtung (3) geblickt wird, in einer festen Position angeordnet sind, und **dadurch gekennzeichnet, dass**:
- der mindestens eine Bogen (5) und der Reißverschluss (8) relativ zu dem ersten Schweißkopf (15) und dem zweiten Schweißkopf (16) kontinuierlich bewegt werden, während der erste Schweißkopf (15) und der zweite Schweißkopf (16) gegen die erste Wand (6) beziehungsweise die zweite Wand (7) vibrieren,
- die Schweißeinheit (13) einen Gegenhalter (17) umfasst, der zwischen dem ersten Schweißkopf (15) und dem zweiten Schweißkopf (16) angeordnet ist,
- in der Schweißposition (12) die erste Wand (6) und der erste Reißstreifen (9) zwischen dem ersten Schweißkopf (15) und dem Gegenhalter (17) angeordnet sind und der erste Reißstreifen (9) durch den vibrierenden ersten Schweißkopf (15) gegen den Gegenhalter (17) gedrückt wird, und
- in der Schweißposition die zweite Wand (7) und der zweite Reißstreifen (10) zwischen dem zweiten Schweißkopf (16) und dem Gegenhalter (17) angeordnet sind und der zweite Reißstreifen (10) durch den vibrierenden zweiten Schweißkopf (16) gegen den Gegenhalter (17) gedrückt wird mit einem statischen Druck von zwischen 0,5 und 6 bar, vorzugsweise von zwischen 1 und 3 bar

11. Verfahren nach Anspruch 10, wobei der Gegenhalter (17) in einer festen Position angeordnet ist.

12. Verfahren nach Anspruch 10 oder 11, wobei in der Schweißposition;
- der erste Reißstreifen (9) an einer ersten inneren Oberfläche (18) der ersten Wand (6) positioniert ist,
- der erste Schweißkopf (15) gegen eine erste äußere Oberfläche (19) der ersten Wand (6) vibriert,
- der zweite Reißstreifen (10) an einer zweiten inneren Oberfläche (20) der zweiten Wand (7) positioniert ist, und
- der zweite Schweißkopf (16) gegen eine zweite äußere Oberfläche (21) der zweiten Wand (7) vibriert.

13. Verfahren nach einem der Ansprüche 10 bis 12, wobei der erste Schweißkopf (15) in demselben Bereich gegen die erste Wand (6) vibriert, in dem der erste Reißstreifen (9) angeordnet ist, und wobei der zweite Schweißkopf (16) in demselben Bereich gegen die zweite Wand (7) vibriert, in dem der zweite Reißstreifen (10) angeordnet ist.

14. Verfahren nach einem der Ansprüche 10 bis 13, wobei der erste Schweißkopf (15) und der zweite Schweißkopf (16) mit einer Frequenz von zwischen 20 und 50 kHz, vorzugsweise von zwischen 30 und 40 kHz, vibrieren.

## Revendications

1. Dispositif (1) pour souder une fermeture à glissière (8) dans une blague à tabac, ledit dispositif comprenant :
- une alimentation en feuilles (4) pour fournir au moins une feuille pliable (5) formant une première paroi (6) et une deuxième paroi (7) opposée de la blague à tabac,
- une alimentation (2) de fermeture à glissière pour fournir une fermeture à glissière (8) comprenant une première bande à glissière (9) et une deuxième bande à glissière (10) correspondante,
- un guide (11) pour positionner la fermeture à glissière (8) dans une position de soudage (12) entre la première paroi (6) et la deuxième paroi (7),
- une unité de soudage (13) pour souder la première bande à glissière (9) à la première paroi (6) et la deuxième bande à glissière (10) à la deuxième paroi (7), tandis que la fermeture à glissière (8) est positionnée dans la position de soudage (12),
- un convoyeur (14) pour transporter la au moins une feuille (5) et la fermeture à glissière (8) dans une direction de convoyage (3) à travers le guide (11) et l'unité de soudage (13), dans lequel
-- l'unité de soudage (13) est une unité de soudage à ultrasons comprenant une première tête de soudage (15) qui vibre contre la première paroi (6) pour souder la première bande à glissière (9) sur la première paroi (6) et une deuxième tête de soudage (16) qui vibre contre la deuxième paroi (7) pour souder la deuxième bande à glissière (10) sur la deuxième paroi (7),
-- le convoyeur (14) achemine en continu la au moins une feuille (5) et la fermeture à glissière (8) à travers l'unité de soudage (13),
-- la première tête de soudage (15) et la deuxième tête de soudage (16) sont positionnées dans une position fixe lorsqu'elles sont observées dans la direction de convoyage (3), et **caractérisé en ce que** :
-- le convoyeur (14) déplace en continu la au moins une feuille (5) et la fermeture à glissière (8) par rapport à la première tête de soudage (15) et à la deuxième tête de soudage (16), tandis que la première tête de soudage (15) et la deuxième tête de soudage (16) vibrent contre la première paroi (6) et la deuxième paroi(7), respectivement,
-- l'unité de soudage (13) comprend une enclume (17) située entre la première tête de soudage (15) et la deuxième tête de soudage (16),
-- dans la position de soudage (12), la première paroi (6) et la première bande à glissière (9) sont situées entre la première tête de soudage (15) et l'enclume (17), et la première bande à glissière (9) est pressée contre l'enclume (17) par la première tête de soudage (15) vibrante et,
-- dans la position de soudage, la deuxième paroi (7) et la deuxième bande à glissière (10) sont situées entre la deuxième tête de soudage (16) et l'enclume (17), et la deuxième bande à glissière (10) est pressée contre l'enclume (17) par la deuxième tête de soudage (16) vibrante,
dans lequel la première tête de soudage (15) et la deuxième tête de soudage (16) sont pressées sur la première paroi (6) et la deuxième paroi (7), respectivement, avec une pression statique comprise entre 0,5 et 6 bars, de préférence entre 1 et 3 bars.

2. Dispositif selon la revendication 1, dans lequel l'enclume (17) est située dans une position fixe.

3. Dispositif selon l'une quelconque des revendications précédentes, dans lequel la première paroi (6) comprend une première surface intérieure (18) et une première surface extérieure (19), la deuxième paroi (7) comprend une deuxième surface intérieure (20) et une deuxième surface extérieure (21) et dans la position de soudage (12) :
- la première bande à glissière (9) est positionnée sur la première surface intérieure (18),
- la première tête de soudage (15) vibre contre la première surface extérieure (19),
- la deuxième bande à glissière (10) est positionnée sur la deuxième surface intérieure (20) et
- la deuxième tête de soudage (16) vibre contre la deuxième surface extérieure (21).

4. Dispositif selon l'une quelconque des revendications précédentes, dans lequel la première tête de soudage (15) vibre contre la première paroi (6) dans la même zone où est située la première bande à glissière (9), et la deuxième tête de soudage (16) vibre contre la deuxième paroi (7) dans la même zone où est située la deuxième bande à glissière (10).

5. Dispositif selon l'une quelconque des revendications précédentes, dans lequel la première tête de soudage (15) et la deuxième tête de soudage (16) vibrent à une fréquence comprise entre 20 et 50 kHz, de préférence entre 30 et 40 kHz.

6. Dispositif selon l'une quelconque des revendications précédentes, dans lequel le convoyeur (14) déplace la au moins une feuille (5) et la fermeture à glissière (8) avec une vitesse comprise entre 5 et 60 mètres / minute, de préférence entre 10 et 40 mètres / minute.

7. Dispositif selon l'une quelconque des revendications précédentes, dans lequel la première tête de soudage (15) a une première surface de contact (23) qui est en contact avec la première paroi (6) pendant la vibration, la deuxième tête de soudage (16) a une deuxième surface de contact (24) qui est en contact avec la deuxième paroi (7) pendant la vibration, et la première surface de contact (23) et la deuxième surface de contact (24) ont chacune une longueur comprise entre 30 et 70 mm, de préférence entre 40 et 60 mm, dans la direction de convoyage (3).

8. Dispositif selon l'une quelconque des revendications précédentes, dans lequel la première tête de soudage (15) et la deuxième tête de soudage (16) vibrent chacune dans une direction de vibration (32) perpendiculaire à la direction de convoyage (3) sur une distance comprise entre 40 et 80 µm, de préférence entre 50 et 70 µm.

9. Dispositif selon l'une quelconque des revendications précédentes, dans lequel la au moins une feuille (5) est en PE et la fermeture à glissière est en PE.

10. Procédé de soudage d'une fermeture à glissière (8) dans une blague à tabac, dans lequel ledit procédé comprend:
- prévoir au moins une feuille pliable (5) formant une première paroi (6) et une deuxième paroi (7) opposée de la blague à tabac,
- prévoir une fermeture à glissière (8) comprenant une première bande à glissière (9) et une deuxième bande à glissière (10) correspondante,
- guider la fermeture à glissière (8) avec un guide (11) dans une position de soudage (12) entre la première paroi (6) et la deuxième paroi (7),
- transporter la au moins une feuille (5) et la fermeture à glissière (8) avec un convoyeur (14) dans une direction de convoyage (3) à travers le guide (11) et l'unité de soudage (13),
- utiliser l'unité de soudage (13) pour souder la première bande à glissière (9) à la première paroi (6) et la deuxième bande à glissière (10) à la deuxième paroi (7), tandis que la fermeture à glissière (8) est située dans la position de soudage (12), dans lequel
-- l'unité de soudage (13) est une unité de soudage par ultrasons comprenant une première tête de soudage (15) et une deuxième tête de soudage (16),
-- le convoyeur (14) transporte en continu la au moins une feuille (5) et la fermeture à glissière (8) à travers l'unité de soudage (13),
-- la première tête de soudure (15) vibre contre la première paroi (6) pour souder la première bande à glissière (9) sur la première paroi (6) et la deuxième tête de soudage (16) vibre contre la deuxième paroi (7) pour souder la deuxième bande à glissière (10) sur la deuxième paroi (7), tandis que la première tête de soudage (15) et la deuxième tête de soudage (16) sont positionnées dans une position fixe lorsqu'elles sont observées dans la direction de convoyage (3), et **caractérisé en ce que**
-- la au moins une feuille (5) et la fermeture à glissière (8) sont déplacées de manière continue par rapport à la première tête de soudage (15) et à la deuxième tête de soudage (16), tandis que la première tête de soudage (15) et la deuxième tête de soudage (16) vibrent contre la première paroi (6) et la deuxième paroi (7), respectivement,
-- l'unité de soudage (13) comprend une enclume (17) située entre la première tête de soudage (15) et la deuxième tête de soudage (16),
-- dans la position de soudage (12), la première paroi (6) et la première bande à glissière (9) sont situées entre la première tête de soudage (15) et l'enclume (17), et la première bande à glissière (9) est pressée contre l'enclume (17) par la première tête de soudage (15) vibrante et,
-- dans la position de soudage (12), la deuxième paroi (7) et la deuxième bande à glissière (10) sont situées entre la deuxième tête de soudage (16) et l'enclume (17), et la deuxième bande à glissière (10) est pressée contre l'enclume (17) par la deuxième tête de soudage (16) vibrante,
dans lequel la première tête de soudage (15) et la deuxième tête de soudage (16) sont pressées sur la première paroi (6) et la deuxième paroi (7), respectivement, avec une pression statique comprise entre 0,5 et 6 bars, de préférence entre 1 et 3 bars.

11. Procédé selon la revendication 10, dans lequel l'enclume (17) est située dans une position fixe.

12. Procédé selon la revendication 10 ou 11, dans lequel dans la position de soudage :
- la première bande à glissière (9) est positionnée sur une première surface intérieure (18) de la première paroi (6),
- la première tête de soudage (15) vibre contre une première surface extérieure (19) de la première paroi (6),
- la deuxième bande à glissière (10) est positionnée sur une deuxième surface intérieure (20) de la deuxième paroi (7), et
- la deuxième tête de soudage (16) vibre contre une deuxième surface extérieure (21) de la deuxième paroi (7).

13. Procédé selon l'une quelconque des revendications 10 à 12, dans lequel la première tête de soudage (15) vibre contre la première paroi (6) dans la même zone où est située la première bande à glissière (9), et la deuxième tête de soudage (16) vibre contre la deuxième paroi (7) dans la même zone où est située la deuxième bande à glissière (10).

14. Procédé selon l'une quelconque des revendications 10 à 13, dans lequel la première tête de soudage (15) et la deuxième tête de soudage (16) vibrent à une fréquence comprise entre 20 et 50 kHz, de préférence entre 30 et 40 kHz.
